# EUROPEAN PATENT SPECIFICATION

(11) **EP 1 490 979 B1**
(45) Date of publication and mention of the grant of the patent: **12.08.2015**
(21) Application number: 03746133.2
(22) Date of filing: 03.04.2003
(51) Int. Cl.: H04B 1/18, H04H 40/90

(54) **POWER SUPPLY FOR A SATELLITE RECEIVER**
STROMVERSORGUNG FÜR EINEN SATELITENEMPFÄNGER
ALIMENTATION ELECTRIQUE POUR UN RECEPTEUR DE SIGNAUX DE SATELLITE

(30) Priority: 03.04.2002 US 370016 P
(43) Date of publication of application: 29.12.2004
(73) Proprietor: Thomson Licensing, 92130 Issy-les-Moulineaux (FR)
(72) Inventor: FITZPATRICK, John, James, Indianapolis, IN 46228 (US); LELEY, Suresh, Vishwanatm, Owensboro KY 42303 (US); BOWYER, Andrew, Eric, Indianapolis, IN 46259 (US); CURTIS, III, John, Joseph, Noblesville, IN 46060 (US); PITSCH, Robert, Alan, Carmel, IN 46032 (US)
(74) Representative: Arnold, Klaus-Peter
(86) International application number: PCT/US2003/010283
(87) International publication number: WO 2003/085850

(56) References cited:
- WO-A2-99/41905
- GB-A- 2 298 939
- US-A- 5 563 500
- US-A- 5 826 170
- US-A- 5 828 206
- US-A- 5 893 023
- US-A- 6 061 577

## Description

The present invention concerns a protection arrangement for a voltage regulator.

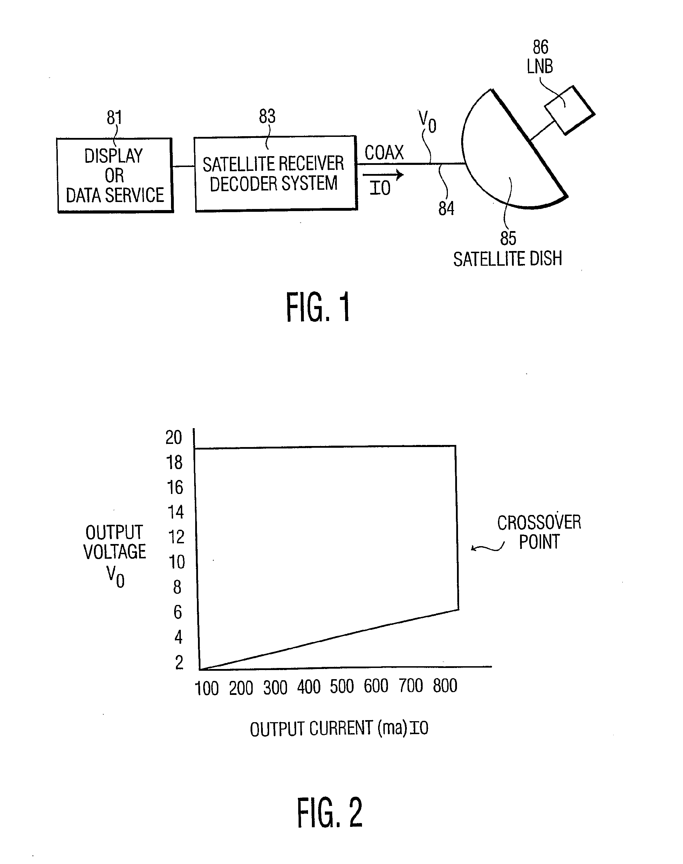

A block diagram of a typical satellite receiver system is depicted in Figure 1. The receiver system includes an outdoor microwave antenna 85 which can be aimed at a satellite to receive a signal from a satellite. The signal received from the satellite is amplified by a conventional low noise block converter (LNB) 86 mounted in very close proximity to or on the antenna. LNB 86 down-converts satellite signals at high frequencies, typically in the gigahertz range, to signals at frequencies in the high megahertz range. An output signal from LNB 86 is carried to an indoor satellite receiver and decoder system 83 by a coaxial cable 84, decoded and presented with a monitor device 81.

In order to supply power to LNB 86, as well as to control the polarization selection of LNB 86, a direct current (DC) output supply voltage Vₒ, produced in a power supply, not shown, but included in satellite receiver and decoder system 83, is multiplexed onto the center conductor of coaxial cable 84. Voltage Vₒ has a level that is, selectively, either 13V or 18V. The power supply, not shown, may include a series pass transistor. An example of a prior art power supply that generates output supply voltage similar to voltage Vₒ is described in United States Patent No. 5,563,500, entitled VOLTAGE REGULATOR HAVING COMPLEMENTARY TYPE TRANSISTOR in the name of Muterspaugh (the Muterspaugh Patent).

The lower and higher output supply levels of voltage Vₒ are used, selectively, to control polarization settings of LNB 86. For example, the lower voltage level 13V selects right hand circular polarization (RHCP) and the higher voltage 18V selects left hand circular polarization (LHCP).

The circuits in LNB 86 of Figure 1 are designed to function properly when energized at either the lower output supply level 13V and the higher output supply level at 18V. A current drain IO of LNB 86 is about the same with either of the 13V level or the 18V level.

Figure 2 illustrates a typical relationship between output supply voltage Vₒ and output current 10 of the power supply, not shown, of the satellite receiver system of FIGURE 1. The maximum power dissipation in the series pass transistor will occur when the voltage difference between the input and output main current conducting terminals of the series pass transistor, not shown, is at the maximum and the output current is at the maximum. This condition will occur at the 6 volt level of FIGURE 2.

With the need to supply three or more satellite antenna devices from a single satellite receiver, the power requirements of the satellite antenna supply are increased. This increase in power driving capability results in a greater power loss (in the form of heat) when a fault condition is present in the power supply. There is a need to minimize the heat generated in the controllable series pass transistor during a fault condition. The controllable series pass transistor may be damaged if a short circuit or other fault is formed at the output terminal of the series pass transistor. A fault condition may be a result of, for example, improper wiring the output of the receiving instrument. Examples of improper wiring include driving a nail through the coax cable and connecting of the satellite receiver to a conventional roof antenna instead of the satellite dish. Such damage often is caused by excessive thermal dissipation of the series pass transistor or by exceeding the current rating of the series pass transistor. For this reason, it is common to provide overload protection to prevent such damage to the series pass transistor.

Another prior art includes a dual input supply voltage of arrangement. When the higher output voltage 18V is selected, a higher input supply voltage of 22 volts is developed at an input, main current conducting terminal of the series pass transistor, not shown. On the other hand, when the lower output voltage of 13 volts is selected, a lower input supply voltage at 16 volts is developed at the input main current conducting terminal of the series pass transistor, not shown. Thereby, the power dissipation in the power series pass transistor, not shown, when the lower output voltage of 13 volts is selected, is, advantageously, reduced.

United States Patent No. 5,893,023, entitled "Satellite receiver including operating voltage supply arrangement suitable for different antenna assemblies", discloses a satellite receiver which is capable of being connected to different antenna assemblies which require different operating voltages. The receiver includes a switch mode power supply which supplies the different operating voltages. A microprocessor controls the duty cycle of the switch mode power supply to produce the different operating voltages in accordance with the required duty cycle. A memory stores values which define different duty cycles for each of the operating voltages and provides the values to the microprocessor.

A power supply, embodying an inventive feature, includes the aforementioned dual input supply voltage arrangement. A comparator senses a magnitude of an output voltage produced by the series pass transistor. When, as a result of an over current condition, the output voltage becomes lower than a reference threshold level, any attempt to select the higher output voltage of 18V is automatically over-ridden and the lower input supply voltage, instead, is developed at the input main current conducting terminal of the series pass transistor, not shown. This action, advantageously, decreases the maximum amount of power that the series pass transistor dissipates.

A power supply for a communication apparatus, embodying an aspect of the invention includes, a source of a first control signal that is indicative when a first antenna signal is to be selected and when a second antenna signal is to be selected. A power transistor is responsive to the first control signal for generating an output supply voltage at a value selected in accordance with the first control signal. The output supply voltage is coupled to a stage of the communication apparatus to select the first antenna signal, when a first value of the output supply voltage is generated and the second antenna signal, when a second value of said output supply voltage is generated. A switch is responsive to the first control signal and coupled to an input of the power transistor for selecting, in a first switching state of the switch, a first input supply voltage to be developed at the input, when the first antenna signal is selected. In a second switching state of the switch, a second input supply voltage is selected to be developed at the input, when the second antenna signal is selected. A fault detector is coupled to the switch for changing the switching state in the switch, when the second antenna signal is selected and a fault condition occurs, to select an input supply voltage to be developed at the input that is different from the second input supply voltage.

### Brief Description of the Drawings

FIGURE 1 illustrates a typical satellite receiver system;
FIGURE 2 illustrates a typical relationship between an output supply voltage and output supply current of a power supply of the satellite receiver system of FIGURE 1;
FIGURE 3 illustrates a power supply regulator, embodying an inventive feature, which can be incorporated in the satellite receiver system of FIGURE 1;
FIGURE 4 illustrates a flow chart for describing a mode of operation the power supply regulator of FIGURE 3 providing protection by a hardware technique;
FIGURE 5 illustrates a flow chart for describing a mode of operation the power supply regulator of FIGURE 3 providing protection by a combination of software and hardware techniques; and
FIGURE 6 illustrates an alternative embodiment of the power supply regulator shown in Figure 3.

### Detailed Description of the Preferred Embodiments

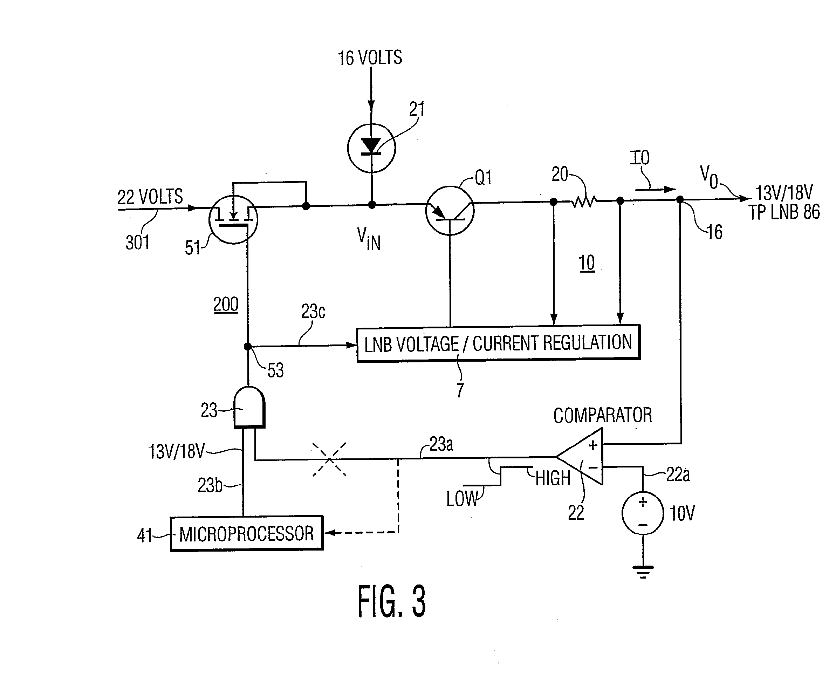

FIGURE 3 illustrates a power supply regulator 10, embodying an inventive feature, is used to energize a low noise block converter (LNB) 86 of FIGURE 1. Power supply regulator 10 of FIGURE 3 provides regulated output voltage Vₒ at an output terminal 16. Terminal 16 is coupled to LNB 86 via coax cable 84 of FIGURE 1. An emitter of a series pass power transistor Q1 of FIGURE 3 is supplied with an input voltage V_{IN} higher than regulated output voltage Vₒ, developed at terminal 16. A collector of transistor Q1 is coupled via a current sensing resistor 20 to terminal 16.

An LNB voltage control circuit 7 senses output voltage Vₒ and controls power transistor Q1 for regulating output voltage Vₒ. A level of output voltage Vₒ is selected by a bi-level or binary control signal 23c at a control terminal 53.

In the absence of a fault condition, the steady state level of output voltage Vₒ is greater than, for example, 10V. Therefore, a comparator 22, embodying an inventive feature, having a corresponding reference voltage 22a, produces an output signal 23a at a TRUE state. Reference voltage 22a establishes the threshold level of comparator 22. Consequently, a signal 23c produced by an AND gate 23 is at the same state as that of an output signal 23b produced by a microprocessor 41. Thus, signal 23c can selectively assume either a TRUE state, for selecting output voltage Vₒ at 18V, or a FALSE state, for selecting output voltage Vₒ at 13V, in accordance with signal 23b of microprocessor 41. For example, the lower voltage level 13V of output voltage Vₒ selects right hand circular polarization (RHCP) and the higher voltage 18V of output voltage Vₒ selects left hand circular polarization (LHCP). Thereby, the antenna signal produced by antenna 85 of FIGURE 1 varies. Thus, the regulation in power supply regulator 10 of FIGURE 3 is performed similarly to that described in the Muterspaugh Patent.

FIGURE 3 also illustrates a dual input supply voltage arrangement 200 for generating input voltage V_{IN} that energizes LNB power supply regulator 10. When the higher output level of voltage Vₒ at 18 volts is selected, a metal oxide semiconductor field effect transistor (MOSFET) 51, operating as a switch, is turned on by signal 23c to supply input voltage V_{IN} at 22 volts to the emitter of transistor Q1 from an input supply voltage 301. On the other hand, when the lower level of output voltage Vₒ at 13 volts is selected, MOSFET 51 is turned off by signal 23c. Consequently, input voltage V_{IN} at approximately 16 volts is supplied to the emitter of input voltage V_{IN} via an anode terminal of diode 21. transistor Q1 via a diode 21. Thus, diode 21 and MOSFET 51 form an input voltage selection switch for a dual voltage power supply.

In normal operation, power supply regulator 10 generates output voltage Vₒ at the 18 volt level from input voltage V_{IN} at approximately 22 volts. Similarly, power supply regulator 10 generates output voltage Vₒ at the 13 volt level from input voltage V_{IN} at approximately 16 volts.

An LNB, similar to LNB 86 of FIGURE 1, includes an internal power supply regulator, not shown, for generating an internal supply voltage of 5V, not shown, from voltage Vₒ at either the 13V level or the 18V level. The internal power supply regulator, not shown, requires a minimum input supply voltage of 6V for producing the 5V level that is capable of providing the maximum required LNB operation current. Thus, a maximum LNB operation current can be produced when voltage Vₒ at at least 6 volts level is applied to LNB 86. In order to assure proper power up operation, power supply regulator 10 of FIGURE 3 is designed to supply a maximum current level of an output current Iₒ when output supply voltage Vₒ is equal to or greater than 6 volt. The relationship between output supply voltage Vo and an output current Iₒ are shown in FIGURE 2, as explained before.

In normal operation (non current limit), the voltage drop between the emitter and collector of power transistor Q1 is within a normal, safe level. A fault condition occurs when, for example, an impedance that is too low is connected to output terminal 16. Consequently, power supply current Iₒ reduces voltage Vₒ to the 6 to 10 volt output level at terminal 16, because of current limiting, as shown at the 6 volt level of FIGURE 2.

The maximum power dissipation in transistor Q1 of FIGURE 3 occurs when voltage Vo is equal to 6V and output current Iₒ is at the current limit level. If not prevented from doing so, the decrease in output voltage Vₒ would cause the voltage drop develop between the emitter and collector of power transistor Q1 to become excessive when input voltage V_{IN} at 22 volts is coupled to the emitter of transistor Q1. The additional heat generated in such fault condition could prematurely produce a permanent damage to power transistor Q1.

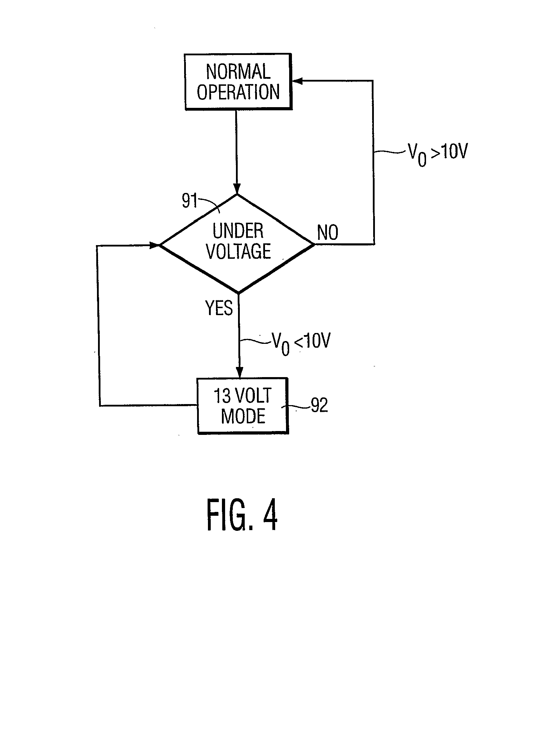

In carrying out an inventive feature, when voltage Vₒ is lower than a threshold level of approximately 10V, as depicted in a step 91 of the flow chart of FIGURE 4, output signal 23a of comparator 22 of FIGURE 3 is at a LOW state. When output signal 23a comparator 22 is at the LOW state, it over-rides, by the operation of AND gate 23, the operation of selection signal 23b. Thereby, power supply regulator 10 is forced to operate in a 13V mode in which output voltage Vₒ is 13V, as depicted in a step 92 of the flow chart of FIGURE 4, regardless of selection signal 23b produced by microprocessor 41.

As explained before, when the lower level of 13 volts of output voltage Vₒ is selected, MOSFET 51, is turned off by signal 23b to supply, via diode 21, input voltage V_{IN} at approximately 16 volts at the emitter of power transistor Q1. This action, advantageously, decreases the amount of power that power transistor Q1 needs to dissipate. The threshold level established by voltage 22a is preferably selected to be lower than the lower voltage level 13V of output voltage Vₒ, and higher than 6 volts.

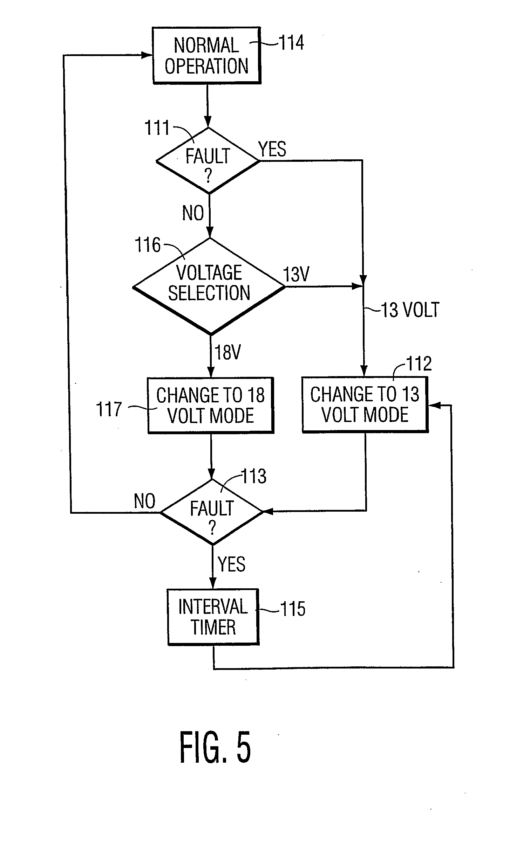

Instead of using AND gate 23 for over-riding the selection, software protection can be used, as depicted in the flow chart of FIGURE 5. In such an alternative arrangement, signal 23a of FIGURE 3 is coupled to microprocessor 41, as shown by the broken line. Signal 23b of microprocessor 41 is passed to terminal 53. Microprocessor 41 monitors signal 23a. When output signal 23a of comparator 22 is at the LOW state, indicating a fault condition, as determined in step 111 of FIGURE 5, microprocessor 41 of FIGURE 3 unconditionally generates signal 23b at the LOW state. Therefore, power supply regulator 10 is forced to operate in the 13 volt mode, in a manner described before, as depicted in step 112 of FIGURE 5. When the fault condition disappears, as depicted in step 113 of FIGURE 5, normal operation step 114 can resume. On the other hand, if the fault persists, an interval timer step 115 will maintain the 13 volt mode. If fault is not detected in step 111, microprocessor 41 of FIGURE 3 selectively generates signal 23b at the LOW state or at the HIGH state in a step 116. Signal 23b of FIGURE 3 at the HIGH state will cause power supply regulator 10 to operate in the 18 volt mode in which output voltage Vₒ is 18V, in a manner described before, as depicted in step 117 of FIGURE 5.

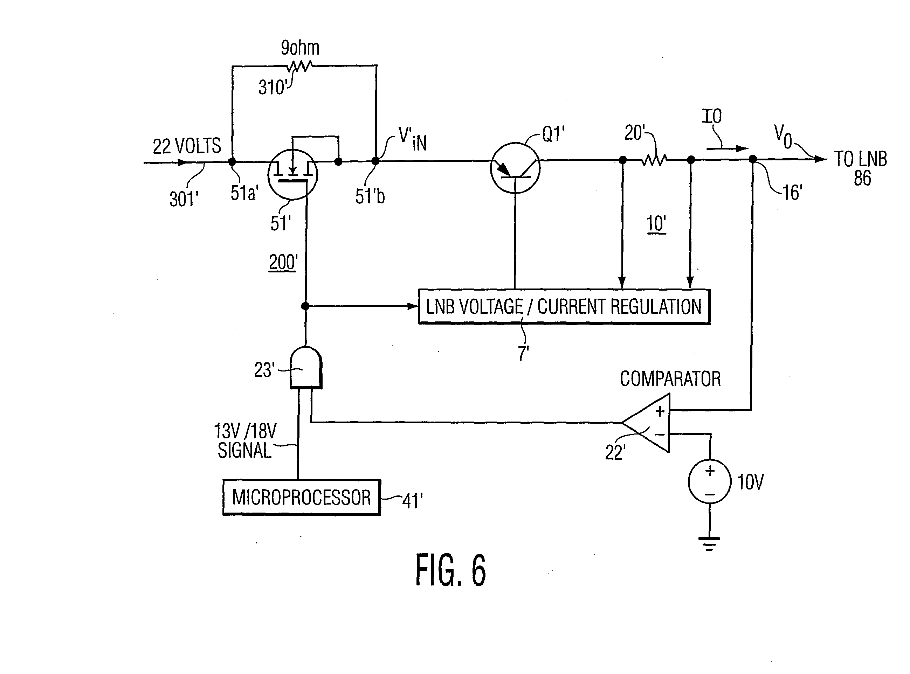

FIGURE 6 illustrates a power supply regulator 10', embodying an inventive feature, that is used to energize LNB 86 of FIGURE 1. Similar symbols in FIGUREs 3 and 6 indicate similar items or functions.

Power supply regulator 10' of FIGURE 6 is intended to provide additional advantages, for example operating with fewer parts at a lower cost and protecting power transistor Q1' against thermal damage from excess heat dissipation. These advantages are achieved by eliminating the dual input supply voltage and, instead, switching a power resistor 310' into and out of a series coupling with power transistor Q1'. Resistor 310' is coupled between a main current conducting terminal 51 a' and a main current conducting terminal 51b'. The differences between the arrangements of FIGUREs 3 and 6 will be described in detail; the remaining operation being substantially the same.

In order to save cost, a single input supply voltage 301' is provided, namely the 22 volt supply. Power resistor 310' is used to absorb the additional heat generated in the lower 13 volt mode, when the lower level of 13 volts of output voltage Vₒ is selected. Power resistor 310' can be implemented, for example, by using two resistors coupled across the main current conducting terminals 51a' and 51b' of MOSFET 51' and having an equivalent value of 9 Ohm. As explained before, circuit 10 of Figure 3 employs diode 21 and MOSFET 51 to switch voltage V_{IN} to the 16 volt level, in a fault condition and when the lower level of 13 volts of output voltage Vₒ is selected. Whereas, in the embodiment of Figure 6, MOSFET 51' causes power resistor 310' to be coupled in series with transistor Q1', both in a fault condition and when the lower level of 13 volts of output voltage Vₒ is selected.

When the LNB supply is in the 13 volt mode, that is when the lower level of 13 volts of output voltage Vₒ is selected, and a high current level is demanded from the supply, substantial heat is dissipated by power transistor Q1'. This heat dissipation burden is advantageously shared by power resistor 310'. Whether power resistor 310' is in or out of the circuit depends on MOSFET 51'being on or off.

## Claims

1. A power supply for a communication apparatus, comprising:
a source (41) of a first control signal (23b) that is indicative when a first antenna signal is to be selected and when a second antenna signal is to be selected;
a power transistor (Q1) responsive (7) to said first control signal for generating an output supply voltage (Vₒ) at a value selected, in accordance with said first control signal, said output supply voltage being coupled to a stage (LNB) of said communication apparatus to select said first antenna signal when a first value of said output supply voltage is generated and said second antenna signal when a second value of said output supply voltage is generated; **characterized in that,**
a switch (51) is responsive to said first control signal and coupled to an input of said power transistor for selecting, in a first switching state of said switch, a first input supply voltage (16V) to be developed at said input, when said first antenna signal is selected, and, in a second switching state of said switch, a second input supply voltage (22V) to be developed at said input when said second antenna signal is selected; and
a fault detector (22) is coupled to said switch (51) for changing the switching state in said switch when said second antenna signal is selected and a fault condition occurs, to select an input supply voltage to be developed at said input that is different from said second input supply voltage.

2. The power supply according to Claim 1, wherein said output supply voltage (Vₒ) is developed at a first main current conductive terminal (collector) of said power transistor (Q1) and each of said first and second input supply voltages is selectively developed at a second main current conductive terminal (emitter) of said power transistor to form a series pass regulator.

3. The power supply according to Claim 2 wherein, in normal operation, when said first antenna signal is selected, a smaller magnitude of said output supply voltage (13V) is generated and said first input supply voltage (16V) having a smaller magnitude than said second input supply voltage (22V) is selected to be developed at said input of said power transistor (Q1) in a manner to reduce a voltage difference between said first (collector) and second (emitter) main current conductive terminals of said power transistor (Q1).

4. The power supply according to Claim 2 wherein, in normal operation, when said second antenna signal is selected, a larger magnitude (18V) of said output supply voltage is generated and said second input supply voltage (22V) having a larger magnitude than said first input supply voltage (16V) is selected to be developed at said input of said power transistor (Q1) and wherein, when said fault condition occurs, said first input supply voltage (16V) is selected instead of said second input supply voltage (22V) to be developed at said second main current conductive terminal (emitter) of said power transistor to reduce a voltage difference between said first (collector) and second (emitter) main current conductive terminals of said power transistor.

5. The power supply according to Claim 2, further comprising a regulator (7) coupled to said power transistor (Q1) for regulating said output supply voltage (Vₒ) in a negative feedback manner.

6. The power supply according to Claim 1 wherein said fault detector comprises a comparator (22) responsive to said output supply voltage (Vₒ) for generating a second control signal (23a) that is coupled to said switch (51) to change the switching state in said switch when said output supply voltage is outside a normal operation range of values.

7. The power supply according to Claim 6 wherein each of said first and second control signals is coupled to said switch (Q1) via a stage (41) performing a logic function.

8. The power supply according to Claim 6 wherein said first control signal (23b) is generated in a microprocessor (41) that is responsive to said second control signal (23a).

9. The power supply according to Claim 1 wherein said switch (51) comprises a second transistor (51'), wherein a power resistor (310') is coupled between a pair of main current conductive terminals of said second transistor (51') and wherein, when said second transistor (51') is at a conductive switching state, said resistor is bypassed and a voltage that is developed at said input is higher than when said second transistor (51') is at a nonconductive switching state and said resistor (310') dissipates power.

## Patentansprüche

1. Stromversorgung für eine Kommunikationsvorrichtung, wobei die Stromversorgung umfasst:
eine Quelle (41) eines ersten Steuersignals (23b), das angibt, wann ein erstes Antennensignal ausgewählt werden soll und wann ein zweites Antennensignal ausgewählt werden soll;
einen Leistungstransistor (Q1), der auf das erste Steuersignal anspricht (7), um in Übereinstimmung mit dem ersten Steuersignal eine Ausgangsversorgungsspannung (Vₒ) mit einem ausgewählten Wert zu erzeugen, wobei die Ausgangsversorgungsspannung mit einer Stufe (LNB) der Kommunikationsvorrichtung gekoppelt ist, um das erste Antennensignal, wenn ein erster Wert der Ausgangsversorgungsspannung erzeugt wird, und das zweite Antennensignal, wenn ein zweiter Wert der Ausgangsversorgungsspannung erzeugt wird, auszuwählen; **dadurch gekennzeichnet, dass** ein Schalter (51) auf das erste Steuersignal anspricht und mit einem Eingang des Leistungstransistors gekoppelt ist, um in einem ersten Schaltzustand des Schalters eine erste Eingangsversorgungsspannung (16V), die an dem Eingang entwickelt werden soll, wenn das erste Antennensignal ausgewählt ist, und in einen zweiten Schaltzustand des Schalters eine zweite Eingangsversorgungsspannung (22V), die an dem Eingang entwickelt werden soll, wenn das zweite Antennensignal ausgewählt ist, auszuwählen; und
mit dem Schalter (51) ein Fehlerdetektor (22) gekoppelt ist, um den Schaltzustand in dem Schalter zu ändern, wenn das zweite Antennensignal ausgewählt ist und ein Fehlerzustand auftritt, um eine Eingangsversorgungsspannung, die an dem Eingang entwickelt werden soll, die von der zweiten Eingangsversorgungsspannung verschieden ist, auszuwählen.

2. Stromversorgung nach Anspruch 1, wobei an einem ersten Hauptstromleitungsanschluss (Kollektor) des Leistungstransistors (Q1) die Ausgangsversorgungsspannung (Vₒ) entwickelt wird und an einem zweiten Hauptstromleitungsanschluss (Emitter) des Leistungstransistors sowohl die erste als auch die zweite Eingangsversorgungsspannung wahlweise entwickelt wird, um einen Seriendurchgangsregler zu bilden.

3. Stromversorgung nach Anspruch 2, wobei im Normalbetrieb, wenn das erste Antennensignal ausgewählt ist, ein kleinerer Betrag der Ausgangsversorgungsspannung (13V) erzeugt wird und die erste Eingangsversorgungsspannung (16V) mit einem kleineren Betrag als die zweite Eingangsversorgungsspannung (22V) dafür ausgewählt wird, an dem Eingang des Leistungstransistors (Q1) in einer Weise entwickelt zu werden, dass eine Spannungsdifferenz zwischen dem ersten (Kollektor-) und dem zweiten (Emitter-) Hauptstromleitungsanschluss des Leistungstransistors (Q1) verringert wird.

4. Stromversorgung nach Anspruch 2, wobei im Normalbetrieb, wenn das zweite Antennensignal ausgewählt ist, ein größerer Betrag (18V) der Ausgangsversorgungsspannung erzeugt wird und die zweite Eingangsversorgungsspannung (22V) mit einem größeren Betrag als die erste Eingangsversorgungsspannung (16V) dafür ausgewählt wird, an dem Eingang des Leistungstransistors (Q1) entwickelt zu werden, und wobei, wenn der Fehlerzustand auftritt, anstelle der zweiten Eingangsversorgungsspannung (22V) die erste Eingangsversorgungsspannung (16V) dafür ausgewählt wird, an dem zweiten Hauptstromleitungsanschluss (Emitter) des Leistungstransistors entwickelt zu werden, um eine Spannungsdifferenz zwischen dem ersten (Kollektor-) und dem zweiten (Emitter-) Hauptstromleitungsanschluss des Leistungstransistors zu verringern.

5. Stromversorgung nach Anspruch 2, die ferner einen Regler (7) umfasst, der mit dem Leistungstransistor (Q1) gekoppelt ist, um die Ausgangsversorgungsspannung (Vₒ) nach Gegenkopplungsart zu regeln.

6. Stromversorgung nach Anspruch 1, wobei der Fehlerdetektor einen Komparator (22) umfasst, der auf die Ausgangsversorgungsspannung (Vₒ) anspricht, um ein zweites Steuersignal (23a) zu erzeugen, das mit dem Schalter (51) gekoppelt ist, um den Schaltzustand in dem Schalter zu ändern, wenn die Ausgangsversorgungsspannung außerhalb eines Normalbetriebswertebereichs liegt.

7. Stromversorgung nach Anspruch 6, wobei sowohl das erste als auch das zweite Steuersignal über eine Stufe (41), die eine Logikfunktion ausführt, mit dem Schalter (Q1) gekoppelt ist.

8. Stromversorgung nach Anspruch 6, wobei das erste Steuersignal (23b) in einem Mikroprozessor (41) erzeugt wird, der auf das zweite Steuersignal (23a) anspricht.

9. Stromversorgung nach Anspruch 1, wobei der Schalter (51) einen zweiten Transistor (51') umfasst, wobei zwischen ein Paar von Hauptstromleitungsanschlüssen des zweiten Transistors (51') ein Leistungswiderstand (310') geschaltet ist, und wobei der Widerstand umgangen wird und eine Spannung, die an dem Eingang entwickelt wird, höher ist, als wenn der zweite Transistor (51') in einem nichtleitenden Schaltzustand ist und der Widerstand (310') Leistung ableitet, wenn der zweite Transistor (51') in einem leitenden Schaltzustand ist.

## Revendications

1. Une alimentation électrique pour un appareil de communication comprenant :
une source (41) d'un premier signal de commande (23b) qui indique lorsqu'un premier signal d'antenne doit être sélectionné et lorsqu'un second signal d'antenne doit être sélectionné ;
un transistor de puissance (Q1) réactif (7) audit premier signal de commande permettant de générer une tension d'alimentation de sortie (V0) à la valeur sélectionnée, selon ledit premier signal de commande, ladite tension d'alimentation de sortie étant couplée à une étape (LNB) dudit appareil de communication pour sélectionner ledit premier signal d'antenne lorsqu'une première valeur de ladite tension d'alimentation de sortie est générée et ledit second signal d'antenne, lorsqu'une seconde valeur de ladite tension d'alimentation de sortie est générée ; **caractérisé en ce que**,
un commutateur (51) est réactif audit premier signal de commande et couplé à une entrée dudit transistor de puissance pour sélectionner, dans un premier état de commutation dudit commutateur, une première tension d'alimentation d'entrée (16 V) à développer à ladite entrée, lorsque ledit premier signal d'antenne est sélectionné, et, dans un second état de commutation dudit commutateur, une seconde tension d'alimentation d'entrée (22 V) à développer à ladite entrée lorsque ledit second signal d'antenne est sélectionné ; et
un détecteur par défaut (22) est couplé audit commutateur (51) pour modifier l'état de commutation dans ledit commutateur lorsque ledit second signal d'antenne est sélectionné et qu'un état par défaut survient, pour sélectionner une tension d'alimentation d'entrée à développer à ladite entrée qui est différente de ladite seconde tension d'alimentation d'entrée.

2. L'alimentation électrique selon la revendication 1, dans laquelle ladite tension d'alimentation de sortie (V0) est développée à un premier terminal conducteur de courant principal (collecteur) dudit transistor de puissance (Q1) et chacune desdites première et seconde tensions d'alimentation d'entrée est sélectivement développée à un second terminal conducteur de courant principal (émetteur) dudit transistor de puissance pour former un régulateur de chute.

3. L'alimentation électrique selon la revendication 2, dans lequel, en conditions normales, lorsque ledit premier signal d'antenne est sélectionné, une magnitude plus petite de ladite tension d'alimentation de sortie (13 V) est générée et ladite première tension d'alimentation d'entrée (16 V) présentant une magnitude plus petite que ladite seconde tension d'alimentation d'entrée (22 V) est sélectionnée pour être développée à ladite entrée dudit transistor de puissance (Q1) afin de réduire une différence de tension entre lesdites première (collecteur) et seconde (émetteur) bornes conductrices de courant principal dudit transistor de puissance (Q1).

4. L'alimentation selon la revendication 2, dans laquelle, en fonctionnement normal, lorsque ledit signal d'antenne est sélectionné, une plus grande magnitude (18 V) de ladite tension d'alimentation de sortie est générée et ladite seconde tension d'alimentation d'entrée (22 V) présentant une magnitude plus importante que ladite première tension d'alimentation d'entrée (16 V) est sélectionnée pour être développée à ladite entrée dudit transistor de puissance (Q1) et dans lequel, lorsque ledit état de défaut survient, ladite première tension d'alimentation d'entrée (16 V) est sélectionnée au lieu de ladite seconde tension d'alimentation d'entrée (22 V) à développer à ladite seconde borne conductrice de courant principal (émetteur) dudit transistor de puissance afin de réduire une différence de tension entre lesdites première (collecteur) et seconde bornes (émetteur) conductrices de courant principal dudit transistor de puissance.

5. L'alimentation électrique selon la revendication 2, comprenant en outre un régulateur (7) couplé audit transistor de puissance (Q1) permettant de réguler ladite tension d'alimentation de sortie (V0) par le biais d'un retour négatif.

6. L'alimentation électrique selon la revendication 1, dans laquelle ledit détecteur d'erreur comprend un comparateur (22) réagissant à ladite tension d'alimentation de sortie (V0) pour générer un second signal de commande (23a) qui est couplé audit commutateur (51) pour modifier le statut de commutation dans ledit commutateur lorsque ladite tension d'alimentation de sortie se trouve hors d'une plage de valeurs de fonctionnement normal.

7. L'alimentation électrique selon la revendication 6, dans laquelle chacun desdits premier et second signaux de commande est couplé audit commutateur (Q1) via une étape (41) exécutant une fonction de logique.

8. L'alimentation électrique selon la revendication 6, dans lequel ledit premier signal de commande (23b) est généré dans un microprocesseur (41) qui réagit audit second signal de commande (23a).

9. L'alimentation électrique selon la revendication 1, dans lequel ledit commutateur (51) comprend un second transistor (51), dans lequel une résistance de fortes puissances (310') est couplée entre une paire de bornes conductrices de courant principal dudit second transistor (51') et dans lequel, lorsque ledit second transistor (51') est dans un état de commutation conducteur, ladite résistance est contournée et une tension développée à ladite entrée est supérieure au moment où ledit second transistor (51') se trouve dans un état de commutation non conducteur et ladite résistance (310') dissipe la puissance.
